# EUROPEAN PATENT APPLICATION

(11) **EP 4 555 870 A1**
(43) Date of publication of application: **21.05.2025**
(21) Application number: 23210336.6
(22) Date of filing: 16.11.2023
(51) Int. Cl.: A23L 29/10, A23L 29/231, A23L 29/238, A23L 29/25, A23L 29/262, A23L 29/269, C12G 3/04

(54) **PLANT-BASED SIMULATED EGG WHITE COMPOSITIONS**

(71) Applicant: Float Foods Pte Ltd, Singapore 528891 (SG)
(72) Inventor: CHOOLANI, Vinita M, 457492 Singapore (SG); BANCILLON, Mathilde Laura, 456487 Singapore (SG)
(74) Representative: Marks & Clerk LLP

(57) **Abstract**

The present invention is directed to plant-based simulated egg white compositions comprising sucrose ester, gum, and water, which can be used as an egg white substitute in beverages such as cocktails, and to methods of producing such compositions.

## Description

### FIELD OF THE INVENTION

The present invention is directed to plant-based simulated egg white compositions which can be used as an egg white substitute in beverages such as cocktails, and methods of producing such compositions.

### BACKGROUND OF THE INVENTION

It is well-known that some characteristics of egg and egg products are often cause for concern, and otherwise impede the ability for some people to consume food containing egg products. For example, many individuals may be unable to, or would prefer not to consume egg products due to egg allergies, health concerns associated with cholesterol, culinary preferences (such as a Vegetarian or vegan diet), use of antibiotics and hormones during poultry production, and diseases associated with poultry (such as, for example, bird flu). Additionally, the high cost and/or cost fluctuations in the price of eggs and the contamination by salmonella carried by eggs have also been a concern of food manufacturers. In addition, the world's ability to provide a growing population with adequate and nutritious food is becoming fragile due to environmental degradation and climate change.

Raw egg whites are often used in cocktail application due to their ability to provide a good foam head in drinks and smooth mouthfeel such as fizzes and sours. However, raw egg whites pose many disadvantages such as the risk of Salmonella, short shelf life as well as the undesirable odour.

There is a need for alternatives to conventional egg whites used in beverages, which retain the functionality of, but do not require, animal-derived eggs, particularly avian eggs, more specifically chicken eggs or their components.

### SUMMARY OF THE INVENTION

The present invention is directed to plant-based vegan egg compositions and methods of producing such compositions. More particularly, the invention provides a vegan "egg white" liquid as an alternative to normal raw egg whites. This liquid mix is able to create a consistent and stable froth without posing any health risk and without any unpleasant odour.

In a first aspect the invention provides a plant-based vegan simulated egg white composition, comprising sucrose ester, gum, and water.

In some embodiments of the plant-based vegan simulated egg white composition;
a) the sucrose ester has a hydrophilic-lipophilic balance (HLB) in the range of 9 to 15; and/or
b) the gum is selected from the group comprising xanthan gum, methylcellulose, guar gum, pectin and gum arabic. Preferably the HLB is 11.

In some embodiments, the gum is a combination of xanthan gum and methylcellulose.

In some embodiments of the plant-based vegan simulated egg white composition comprises;
sucrose ester in an amount of about 0.5-3 wt%, gum in an amount of about 0.1 to about 0.2 wt%, and water in an amount of about 96.8 to about 99.4 wt%, by weight of said simulated egg white composition.

In some embodiments, the gum comprises xanthan gum in an amount of about 0.05 to about 0.1 wt% and methylcellulose in an amount of about 0.05 to about 0.1 wt%, by weight of said simulated egg white composition.

In some embodiments of the plant-based vegan simulated egg white composition comprises;
xanthan gum in an amount of about 0.05 wt%, methylcellulose in an amount of about 0.05 wt%, sucrose ester in an amount of about 0.5 wt%, and water in an amount of about 99.4 wt%, by weight of said simulated egg white composition.

In a second aspect, the invention provides a method of producing a vegan simulated egg white composition of the first aspect, comprising the steps:
i) mix sucrose ester and gum together;
ii) slowly add the mixture to water with stirring until all solids are dissolved.

In some embodiments the method further comprises the steps:
iii) add a portion of dissolved composition from step ii) to a suitable cocktail beverage; and
iv) shake or whisk until the desired consistency is obtained.

In some embodiments the portion in iii) is a volume of about 40-50 mL.

In a third aspect the invention provides a kit comprising a plant-based vegan simulated egg white composition of the first aspect.

### BRIEF DESCRIPTION OF THE FIGURES

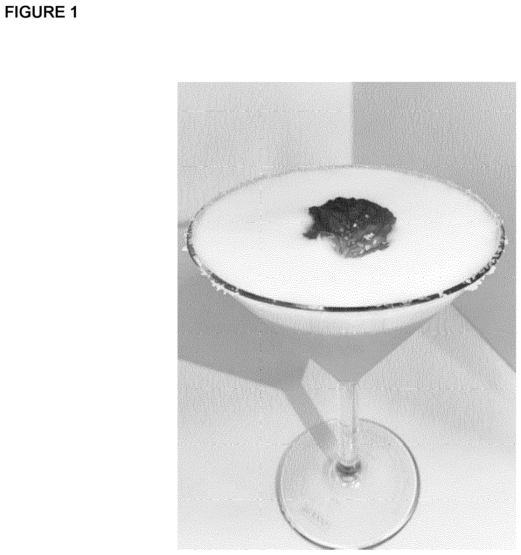

**Figure 1** shows the appearance of the vegan simulated egg white of the invention on the top of a cocktail.

### DETAILED DESCRIPTION OF THE INVENTION

### Definitions

Certain terms employed in the specification, examples and appended claims are collected here for convenience.

It must be noted that as used herein and in the appended claims, the singular forms "a", "an", and "the" include plural reference unless the context clearly dictates otherwise.

As used herein, the term "comprising" or "including" is to be interpreted as specifying the presence of the stated features, integers, steps or components as referred to, but does not preclude the presence or addition of one or more features, integers, steps or components, or groups thereof. However, in context with the present disclosure, the term "comprising" or "including" also includes "consisting of". The variations of the word "comprising", such as "comprise" and "comprises", and "including", such as "include" and "includes", have correspondingly varied meanings.

As used herein, the term "about" is intended to encompass a variance of 10% from a recited numerical value. For example, 'about 4 wt%' in relation to a vegan simulated egg white cocktail composition of the invention encompasses a numerical value of 3.6 to 4.4 wt%.

Having now generally described the invention, the same will be more readily understood through reference to the following examples which are provided by way of illustration, and are not intended to be limiting of the present invention.

### EXAMPLES

### EXAMPLE 1

### Plant-based vegan simulated egg white components

Sucrose ester is an emulsifier, obtained by esterifying sucrose with edible fatty acids from palm oil. This ingredient is used in many applications such as bakery, confectionary, cereals, ice cream, sauces and beverages. Most importantly, sucrose esters is essential in the formulation of vegan "egg" white for cocktail application as it has the unique ability to provide aeration by boosting the functions of other emulsifiers and improve the air bubble structure. This allows for better foam height and stability when used in cocktail mixes. An example of a sucrose ester is marketed as Habo MX (T110D0110) by Compass Foods. The optimal amount of sucrose esters in the vegan "egg" white formulation ranges from about 0.05 - 3.00 wt%, by weight of said vegan "egg" white composition. As sucrose esters have a wide range in their hydrophilic-lipophilic balance (HLB), it is important to note that the higher the HLB, the lower the recommended dosage, to prevent severe sedimentation or undesired precipitation. For solubility, in general, the higher the HLB value of the ester, the more soluble it is in water, whereas lower HLB esters are more soluble in oil/fat and medium HLB esters are partly soluble in water and partly in oil/fat. Preferably the sucrose ester used in the composition of the invention is soluble in water. Preferably, the sucrose ester has a HLB in the range of 9 to 15. More preferably the HLB is 11.

### Gums

Xanthan gum and methylcellulose are used in this "vegan" egg white formulation. Xanthan gum is an exopolysaccharide secreted by the microorganism Xanthomonas campestris. Advantageously, this hydrocolloid exhibits excellent stabilizing effect to provide a structure for air bubbles, which is necessary in the foam head created by the sucrose esters as previously mentioned above. In addition, methylcellulose is necessary in the formulation as it provides a better viscosity and mouthfeel to the overall beverage. Furthermore, it is able to provide additional support to the foam structure, slowing down the overall rate of foam breakage and separation. The optimal amount of each gum mentioned ranges from about 0.05 - 0.10 wt%, preferably from 0.05 - 0.10 wt%, by weight of said vegan "egg: white composition. Other gums such as gum arabic, pectin and guar gum may also be used. However, trials have shown that these gums could also provide good mouthfeel to the final beverage but were not as effective in stabilizing the foam as compared to xanthan gum and methylcellulose.

### Water

Water acts as the medium for the activation of both the sucrose esters and the gums. When heating is involved, it allows for full dispersion and hence activates the functionality of the esters. For this formulation, given that the sucrose ester has a HLB value of 11, water is the preferred medium for solubility and activation. Xanthan gum and methylcellulose are also soluble in water. The amount of water added to the composition brings the total wt% of the composition up to 100%.

### Formulation

In some embodiments, the vegan simulated egg white composition of the invention is formulated as shown in Table 1.

**Table 1: Composition of Vegan simulated egg white**

| **Ingredients** | **Composition Percentage (wt%)** |
|---|---|
| Water | 96.8 - 99.4 |
| Sucrose esters | 0.50 - 3.00 |
| Methylcellulose | 0.05 - 0.10 |
| Xanthan gum | 0.05 - 0.10 |

In some embodiments, the vegan simulated egg white composition of the invention is formulated as shown in Table 2.

**Table 2: Composition of Vegan simulated egg white**

| **Ingredients** | **Composition Percentage (wt%)** |
|---|---|
| Water | 99.4 |
| Sucrose esters (Habo MX (T110D0110)) | 0.50 |
| Methylcellulose | 0.05 |
| Xanthan gum | 0.05 |

In some embodiments, the vegan simulated egg white composition of the invention may be prepared as follows:

### Method of Preparation

1. Mix all dry ingredients (i.e. sucrose esters, methylcellulose, xanthan gum) together in a dry bowl.
2. Weigh out the water in a separate container.
3. Slowly add all the dry ingredients into the water with continuously stirring until all solids are completely dissolved.

In some embodiments, the egg white composition may be applied to a cocktail beverage as follows:
4. To a cocktail beverage, add about 40-50 mL of liquid from step 3 to replace one raw egg white serving in the beverage.
5. Shake or whisk the combination from step 4 to get the desired foam.

Figure 2 shows a cocktail comprising foamed simulated egg white composition of the invention.

## Claims

1. A plant-based vegan simulated egg white composition, comprising; sucrose ester, gum, and water.

2. The plant-based vegan simulated egg white composition of claim 1, wherein;
a) the sucrose ester has a hydrophilic-lipophilic balance (HLB) in the range of 9 to 15; and/or
b) the gum is selected from the group comprising xanthan gum, methylcellulose, guar gum, pectin and gum arabic.

3. The plant-based vegan simulated egg white composition of claim 1 or 2, wherein the gum is a combination of xanthan gum and methylcellulose.

4. The plant-based vegan simulated egg white composition of any one of claims 1 to 3, comprising;
sucrose ester in an amount of about 0.5-3 wt%, gum in an amount of about 0.1 to about 0.2 wt%, and water in an amount of about 96.8 to about 99.4 wt%, by weight of said simulated egg white composition.

5. The plant-based vegan simulated egg white composition of claim 4, wherein the gum comprises xanthan gum in an amount of about 0.05 to about 0.1 wt% and methylcellulose in an amount of about 0.05 to about 0.1 wt%, by weight of said simulated egg white composition.

6. The plant-based vegan simulated egg white composition of any one of claims 1 to 5, comprising;
xanthan gum in an amount of about 0.05 wt%, methylcellulose in an amount of about 0.05 wt%, sucrose ester in an amount of about 0.5 wt%, and water in an amount of about 99.4 wt%, by weight of said simulated egg white composition.

7. A method of producing a vegan simulated egg white composition of any one of claims 1 to 6, comprising the steps:
i) mix sucrose ester and gum together;
ii) slowly add the mixture to water with stirring until all solids are dissolved.

8. The method of claim 7, further comprising the steps:
iii) add a portion of dissolved composition from step ii) to a suitable cocktail beverage; and
iv) shake or whisk until the desired consistency is obtained.

9. The method of claim 8, wherein the portion is a volume of about 40-50 mL.

10. A kit comprising a plant-based vegan simulated egg white composition of any one of claims 1 to 6.
